# EUROPÄISCHE PATENTSCHRIFT

(11) **EP 1 078 279 B1**
(45) Veröffentlichungstag und Bekanntmachung des Hinweises auf die Patenterteilung: **17.09.2003**
(21) Anmeldenummer: 99929019.0
(22) Anmeldetag: 23.04.1999
(51) Int. Cl.: G01S 15/04

(54) **ULTRASCHALLÜBERWACHUNG UND EINBRUCHSMELDUNG**
ULTRASOUND SURVEILLANCE AND BREAK-IN ALARM
PROCEDE ET SYSTEME DE SURVEILLANCE PAR ULTRASONS ET D'AVERTISSEMENT D'EFFRACTION

(30) Priorität: 11.05.1998 AU PP346598; 23.03.1999 AU 2137799
(43) Veröffentlichungstag der Anmeldung: 28.02.2001
(73) Patentinhaber: ROBERT BOSCH GMBH, 70442 Stuttgart (DE)
(72) Erfinder: HOWELL, Brian, Rodney, Blackburn, VIC 3130 (AU)
(86) Internationale Anmeldenummer: DE9901220
(87) Internationale Veröffentlichungsnummer: WO99058998

(56) Entgegenhaltungen:
- DE-A- 3 701 521
- US-A- 5 012 455

## Beschreibung

### BEREICH DER ERFINDUNG

Die vorliegende Erfindung bezieht sich auf Ultraschallüberwachung und Einbruchsmeldung, insbesondere, jedoch nicht ausschließlich, für den Innenraum eines Fahrzeugs.

### HINTERGRUND DER ERFINDUNG

Es sind eine Anzahl von Ultraschallüberwachungsverfahren bekannt, wie zum Beispiel aus dem deutschen Patent DE 195 21 511 C1, welches sich auf die Überwachung eines Innenraums eines Fahrzeugs bezieht. Die Verfahren beinhalten die Übertragung eines Ultraschallimpulses, Empfangen eines resultierenden Echosignals und Vergleich der Echosignal-Hüllkurve mit einem vorgebbaren Bezugsprofil oder einer vorausgehenden Echosignal-Hüllkurve. Es kann angenommen werden, daß Besitzstörung oder Einbruch vorliegt, wenn der Vergleich eine Differenz rücksendet, die einen Grenzpegel überschreitet. Die Pausenlänge ist größer als die Zeitdauer des empfangenen Echosignals, so daß jede Echosignal-Hüllkurve aufeinanderfolgend ohne jegliche Überlagerung empfangen wird, um eine Repräsentation des gesamten Fahrzeuginneren bereitzustellen.

### BESCHREIBUNG DER ERFINDUNG

Die Erfindung bezieht sich auf ein Ultraschallüberwachungsverfahren, welches folgendes einschließt:
Senden einer Sequenz von Ultraschallimpulsen in einen Raum,
Empfangen eines resultierenden Echosignals,
Überwachung des Raums in Bezug auf Einbruch durch Vergleichen des resultierenden Echosignals, das in einer ersten Fensterperiode empfangen wird, mit dem resultierenden Echosignal, das in einer zweiten Fensterperiode empfangen wird, wobei die Impulse durch ein Zeitintervall getrennt sind, so daß die von den Impulsen erzeugten Echos überlagert werden, um das resultierende Signal zu bilden.

Bevorzugterweise wird das in der ersten Fensterperiode empfangene Echosignal zum Echtzeitvergleich mit dem in der zweiten Fensterperiode empfangenen Echosignal gespeichert.

Bevorzugterweise sind die Fensterperioden mit den Impulsen synchronisiert.

Bevorzugterweise beinhaltet das Verfahren das Senden der Impulssequenz in einem ersten Betriebszeitraum, wobei, falls der Vergleich ein Ergebnis unterhalb eines Grenzpegels rücksendet, das Senden der Impulse unterbrochen wird bis ein zweiter Betriebszeitraum begonnen wird, und wobei das Senden der Impulse als eine Intrusionssequenz fortgesetzt wird, falls der Vergleich ein Ergebnis oberhalb eines Grenzpegels rücksendet.

In einer weiteren Realisierung ist ein Ultraschallüberwachungssystem zum Einsatz in dem oben beschriebenen Verfahren vorgesehen, welches folgendes einschließt:
einen Sender,
einen Empfänger,
einen Mikroprozessor, welcher dafür vorgesehen ist, eine Sequenz von Ultraschallimpulsen von dem Sender in einem vorgegebenen Intervall zu übermitteln und über eine Vielzahl von Fensterperioden ein resultierendes Echosignal zu empfangen und vergleichen, wobei das Intervall so eingestellt ist, daß die von den Impulsen erzeugten Echos überlagert sind, um das resultierende Signal zu bilden.

Bevorzugterweise ist der Mikroprozessor so ausgelegt, daß die Impulssequenz für den verbleibenden Teil einer ersten Betriebszeitraums unterbrochen wird, und so ausgelegt, daß die Sequenz in einem zweiten Betriebszeitraum weitergegeben wird, falls der Vergleich ein Ergebnis, welches unterhalb eines Grenzpegels liegt, rücksendet, und wobei eine Intrusionssequenz ausgelöst wird, falls der Vergleich ein Ergebnis oberhalb des Grenzpegels rücksendet.

Die Erfindung ist anschließend mit Bezug auf die beiliegenden Zeichnungen näher beschrieben, wobei das Beispiel in keiner Weise den Umfang der Erfindung beschränkt.

### KURZE BESCHREIBUNG DER ZEICHNUNGEN

Figur 1 ist eine schematische Darstellung einer Zeitfolge, die ein den Stand der Technik darstellendes Ultraschallüberwachungsverfahren zeigt.
Figur 2 ist eine schematische Darstellung einer Zeitfolge, die die Ultraschallüberwachung gemäß der vorliegenden Erfindung zeigt; und
Figuren 3 und 4 stellen Betriebszustände eines gemäß der Erfindung verwendeten Mikroprozessors dar; und
Figur 5 ist eine schematische Darstellung einer Zeitfolge, die ein weiteres Beispiel einer Ultraschallüberwachung gemäß der Erfindung zeigt.

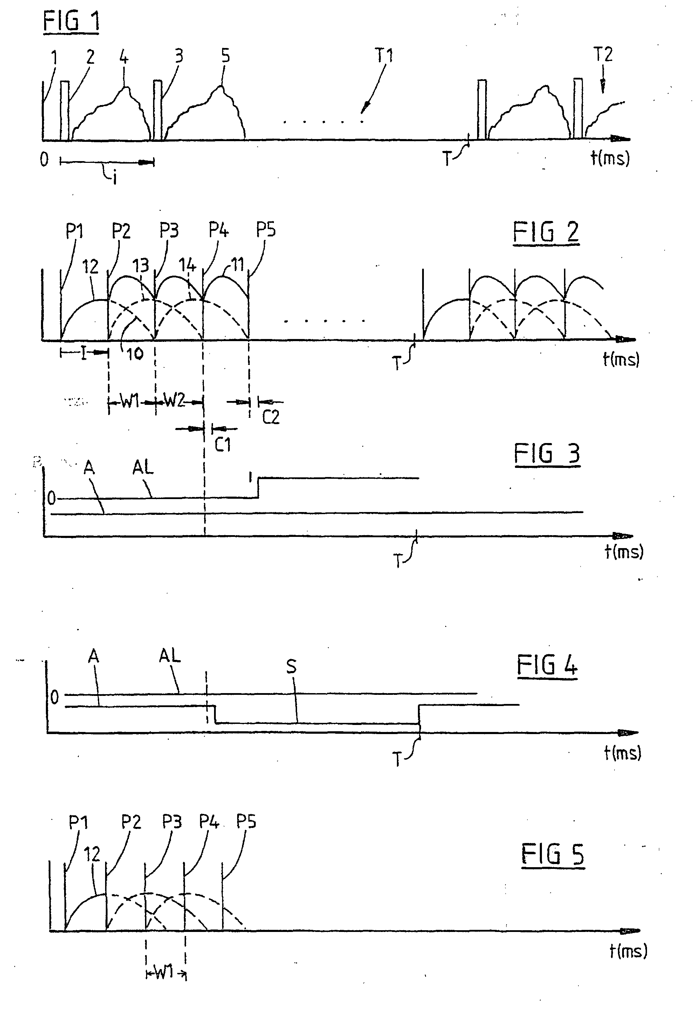

Die Zeitfolge in Figur 1 zeigt ein den Stand der Technik darstellendes Ultraschall-überwachungsverfahren. Das Verfahren beinhaltet die Übertragung einer Mehrzahl von Ultraschallimpulsen 2, 3 in den Innenraum eines Fahrzeugs. Jeder Impuls erzeugt ein räumliches Echosignal, welches durch eine entsprechende Signal-Hüllkurve 4, 5 dargestellt wird. Das Intervall "I" zwischen den einzelnen Impulsen ist so festgelegt, daß die Signalhüllkurve endet, bevor ein weiterer Impuls übermittelt wird. Ein Vergleich der Signalhüllkurven ermöglicht die Feststellung, ob ein Unbefugter in das Fahrzeug eingedrungen ist. Falls die Differenz zwischen den Signalhüllkurven minimal ist, d.h. unterhalb eines Grenzpegels, so wird angenommen, daß kein Einbruch stattgefunden hat, und die Impulse werden für den verbleibenden Teil des Betriebszeitraums T1, der bei Zeit "T" endet, unterbrochen, was, zum Beispiel, 500 ms nach dem Beginn der Impulssequenz sein kann. Dieselbe Sequenz wird zu Beginn eines zweiten Betriebszeitraums T2 gewählt.

Die vorliegende Erfindung benutzt im Gegensatz dazu eine Überlagerung von Echosignal-Hüllkurven, wie in Figur 2 gezeigt. Eine Mehrzahl von Impulsen P 1 bis P4 werden in einen Raum, wie z.B. ein Fahrzeuginneres, übertragen, und zwar zu einem vorgegebenen Intervall "I" welches kürzer als die Zeitdauer einer reflektierten Echosignal-Hüllkurve 10 ist, so daß ein resultierendes Echosignal 11 als Ergebnis der Überlagerung der Mehrzahl individueller Signal-Hüllkurven (in gestrichelten Linien dargestellt) erzeugt wird. Genauer gesagt, der erste Impuls P1 resultiert in einer ersten Echosignal-Hüllkurve 10. Der zweite Impuls P2 erzeugt eine entsprechende zweite Signal-Hüllkurve 13 und der dritte Impuls P3 erzeugt gleicherweise eine dritte Signal-Hüllkurve 14. Die Hüllkurven werden überlagert und das resultierende Signal 11 wird empfangen und in Fensterperioden W1 und W2 zwischen dem zweiten und dritten Impuls P2, P3, bzw. dem dritten und vierten Impuls P3, P4 registriert. Ein Vergleich wird dann zwischen dem in W2 registrierten Signal mit dem in W1 registrierten Signal, und umgekehrt, angestellt. Dieser Vergleich wird während der Periode C1, sofort nach dem vierten Impuls P4, durchgeführt. Eine bevorzugtere Vergleichsmethode ist, das in W1 empfangene Signal zum Zweck eines Echtzeitvergleichs mit dem in W2 empfangenen Signal zu speichern. Falls der Vergleich ein Ergebnis rücksendet, welches weniger als ein vorgegebener Grenzpegel ist, dann wird angenommen, daß kein Einbruch stattgefunden hat, und die Impulse können für den Rest des ersten Betriebszeitraums abgebrochen und zu Beginn des zweiten Betriebszeitraums wiederbegonnen werden. Falls jedoch die Differenz den Grenzpegel überschreitet, können weitere Impulse, wie z.B. P5, übertragen und eine Intrusionssequenz eingeleitet werden, und zwar entweder durch Betätigung eines Alarms oder weitere Impulsübertragungen für nachfolgenden Vergleich und Bestätigung der Differenzen.

In dieser Hinsicht beinhaltet das System gemäß der Erfindung (nicht gezeigt) einen Sender, einen Empfänger, der bevorzugterweise mit dem Sender in einem Sende-Empfangsgerät kombiniert ist, und einen Mikroprozessor zum Empfangen und Abtasten des Echosignals 11, welches aus den von dem Sender erzeugten Impulsen resultiert. In Figur 3 ist der Mikroprozessor schematisch in einem aktiven Status 'A' dargestellt. Er wird in einem aktiven Status verbleibend gezeigt, da eine Differenz in C1 entdeckt wird, die den Grenzpegel überschreitet. In der Folge wird die Impulsübertragung für einen weiteren Vergleich aufrechterhalten, in dem das in einem dritten Fenster zwischen Impulsen P4 und P5 bei C2 empfangene Signal verwendet wird. Falls der Vergleich wiederum eine Differenz aufweist, die größer als der Grenzpegel ist, so schaltet der Mikroprozessor ein Alarmsignal AL von einem Null-Zustand zu einem Logik 1 - Zustand, um einen Alarm zu betätigen. Figur 4 zeigt ein alternatives Verfahren, wobei der Vergleich bei C1 ein Ergebnis rücksendet, welches unterhalb eines Grenzpegels liegt, wobei der Mikorprozessor die Übertragung der Impulse abbricht und in einen untätigen Bereitschaftszustand S (sleep) für die Dauer des ersten Betriebszeitraums umschaltet.

Hierbei muß zumindest die erste Signal-Hüllkurve vor oder innerhalb des ersten Abtastfensters W 1 enden, damit ein bedeutungsvoller Vergleich zwischen dem jeweils in den Fenstern W1 und W 2 gespeicherten Signal angestellt werden kann. Falls daher das Interval I kürzer als die Hälfte der Zeitdauer der Signal-Hüllkurve ist, so muß die erste Abtastperiode W1 bis nach dem dritten Impuls, wie in Figur 5 dargestellt, verzögert werden. Die Zeitdauer der Signal-Hüllkurve ist von den Abmessungen des Raumes, der überwacht werden soll, abhängig.
Dementsprechend müssen die Anzahl der Impulse, die erforderlich sind, und die Intervalle zwischen den Impulsen in Abhängigkeit von den vorliegenden Abmessungen zweckdienlich gewählt werden, bevor ein Vergleich gemacht werden kann. Jedoch wird erwartet, daß für die meisten Fahrzeuge nur drei oder fünf Ausgangsimpulse erforderlich sind, bevor ein Vergleich angestellt werden kann. Die Anzahl und Zeitdauer der Fensterperioden sind auch zum Erzielen optimaler Vergleichsergebnisse auswählbar, wobei sie mit den Impulsen synchronisiert sind.

Die vorliegende Erfindung kann daher eine Steigerung der Geschwindigkeit in der Einbruchsmeldung erzielen, zumindest im Fall, wo nur drei Ausgangsimpulse erforderlich sind, im Vergleich mit dem dem Stand der Technik entsprechenden Verfahren. Im umgekehrten Fall, falls keine Besitzstörung erfaßt wird, kann die Sequenz der Impulse früher als bei dem Stand der Technik unterbrochen werden, um die Zeit des Mikroprozessors im vollen Betriebsstand zu reduzieren und dadurch Strom einzusparen.

Obwohl die Erfindung mit Bezug auf Fahrzeuge beschrieben worden ist, sollte zur Kenntnis genommen werden, daß sie in gleicher Weise auf jeden beliebigen zu überwachenden Raum anwendbar ist.

Das oben beschriebene Verfahren und System dient nur als Beispiel, und eine Vielzahl von Änderungen und Abwandlungen können hierzu vorgenommen werden, ohne von dem Sinn oder Umfang dieser Erfindung abzuweichen.

## Patentansprüche

1. Ein Ultraschallüberwachungsverfahren einschließlich Senden einer Sequenz von Ultraschallimpulsen (P1....P5) in einen Raum; Empfangen eines resultierenden Echosignals (11);
Überwachen des Raumes in Bezug auf Einbruch durch Vergleichen des resultierenden Echosignals (11), das in einer ersten Fensterperiode (W1) empfangen wird, mit dem resultierenden Echosignal, das in einer zweiten Fensterperiode (W2) empfangen wird, wobei die Impulse (P1....P5) durch ein Zeitintervall (I) getrennt sind, das kürzer als die Zeitdauer der reflektierten Echosignale ist, so daß die von den Impulsen (P1...P5) erzeugten Echos überlagert werden, um das resultierende Echosignal (11) zu bilden.

2. Ein Ultraschallüberwachungsverfahren gemäß Anspruch 1, wobei das in der ersten Fensterperiode empfangene Echosignal zum Echtzeitvergleich mit dem in der zweiten Fensterperiode empfangenen Echosignal gespeichert wird.

3. Ein Ultraschallüberwachungsverfahren gemäß Anspruch 1 oder 2, wobei die Fensterperioden mit den Impulsen synchronisiert sind.

4. Ein Ultraschallüberwachungsverfahren gemäß einem beliebigen der vorangegangenen Ansprüche, wobei das Verfahren folgendes einschließt: das Senden der Impulssequenz in einem ersten Betriebszeitraum, wobei, falls der Vergleich ein Ergebnis unterhalb eines Grenzpegels rücksendet, das Senden der Impulse unterbrochen wird bis ein zweiter Betriebszeitraum begonnen wird, und wobei das Senden der Impulse als eine Intrusionssequenz fortgesetzt wird, falls der Vergleich ein Ergebnis oberhalb eines Grenzpegels rücksendet.

5. Ein Ultraschallüberwachungsverfahren gemäß einem beliebigen der vorangegangenen Ansprüche, wobei die Impulssequenz in Bezug auf die Anzahl der Impulse und das Intervall zwischen den Impulsen einstellbar ist.

6. Ein Ultraschallüberwachungsverfahren gemäß einem beliebigen der vorangegangenen Ansprüche, wobei die Fensterperioden einstellbar sind.

7. Ein Ultraschallüberwachungssystem zur Verwendung in dem Verfahren gemäß einem beliebigen der Ansprüche 1 bis 4, welches folgende einschließt:
einen Sender,
einen Empfänger, und
einen Mikroprozessor, welcher dafür vorgesehen ist, eine Sequenz von Ultraschallimpulsen (P1....P5), die durch ein Zeitintervall (I) getrennt sind, von dem Sender auszusenden und über eine Vielzahl von Fensterperioden (W1, W2) ein resultierendes Echosignal (11) zu empfangen und zu vergleichen, wobei das Zeitintervall (I) so eingestellt ist, daß die von den Impulsen (P1...P5) erzeugten Echos überlagert sind, um das resultierende Echosignal (11) zu bilden.

8. Ein Ultraschallüberwachungssystem gemäß Anspruch 5, wobei der Mikroprozessor so ausgelegt ist, daß die Impulssequenz für den verbleibenden Teil eines ersten Betriebszeitraums unterbrochen wird, und so ausgelegt, daß die Sequenz in einem zweiten Betriebszeitraum weitergegeben wird, falls der Vergleich ein Ergebnis, welches unterhalb eines Grenzpegels liegt, rücksendet, und wobei eine Intrusionssequenz ausgelöst wird, falls der Vergleich ein Ergebnis oberhalb des Grenzpegels rücksendet.

9. Ein Ultraschallüberwachungssystem gemäß Anspruch 7 oder 8, wobei der Empfänger und der Sender in einem Sende-Empfangsgerät kombiniert sind.

## Claims

1. An ultrasound monitoring method including transmission of a sequence of ultrasound pulses (P1...P5) into an area; reception of a resultant echo signal (11) ;
monitoring of the area for intrusion by comparison of the resultant echo signal (11) which is received in a first window period (W1) with the resultant echo signal which is received in a second window period (W2), with the pulses (P1...P5) being separated by a time interval (I) which is shorter than the time duration of the reflected echo signals, such that the echoes which are produced by the pulses (P1...P5) are superimposed in order to form the resultant echo signal (11).

2. An ultrasound monitoring method according to Claim 1, with the echo signal which is received in the first window period being stored for real time comparison with the echo signal which is received in the second window period.

3. An ultrasound monitoring method according to Claim 1 or 2, with the window periods being synchronized to the pulses.

4. An ultrasound monitoring method according to any of the preceding claims, with the method including the following: the transmission of the pulse sequence in a first operating time period with, if the comparison gives a result below a limit level, the transmission of the pulses being interrupted until a second operating time period has started, and with the transmission of the pulses being continued as an intrusion sequence if the comparison gives a result above a limit level.

5. An ultrasound monitoring method according to any of the preceding claims, in which the pulse sequence can be adjusted with respect to the number of pulses and with respect to the interval between the pulses.

6. An ultrasound monitoring method according to any of the preceding claims, in which the window periods are adjustable.

7. An ultrasound monitoring system for use in the method according to any of Claims 1 to 4, which includes the following:
a transmitter,
a receiver, and
a microprocessor which is intended for transmitting a sequence of ultrasound pulses (P1...P5) which are separated by a time interval (I) from the transmitter, and for receiving and comparing a resultant echo signal (11) which results over a large number of window periods (W1, W2), with the time interval (I) being set such that the echoes which are produced by the pulses (P1...P5) are superimposed in order to form the resultant echo signal (11).

8. An ultrasound monitoring system according to Claim 5, with the microprocessor being designed such that the pulse sequence is interrupted for the remaining part of a first operating time period, and being designed such that the sequence is continued in a second operating time period if the comparison gives a result which is below a limit level, and with an intrusion sequence being initiated if the comparison gives a result above the limit level.

9. An ultrasound monitoring system according to Claim 7 or 8, with the receiver and the transmitter being combined in a transmitting/receiving unit.

## Revendications

1. Procédé de surveillance par ultrasons comprenant l'émission d'une séquence d'impulsions ultrasonores (P1 ... P5) dans un espace, la réception d'un signal d'écho (11) résultant, la surveillance de l'espace au niveau d'effractions par comparaison du signal d'écho résultant (11), qui est reçu dans un premier créneau temporel (W1), avec le signal d'écho résultant, qui est reçu dans un deuxième créneau temporel (W2),
**caractérisé en ce que**
les impulsions (P1 ... P5) sont séparées par un intervalle de temps (I), plus court que la durée des signaux d'écho réfléchis, de telle sorte que les échos générés par les impulsions (P1 ... P5) sont superposés pour constituer le signal d'écho (11) résultant.

2. Procédé de surveillance par ultrasons selon la revendication 1,
selon lequel
le signal d'écho reçu dans le premier créneau temporel est mémorisé pour une comparaison en temps réel avec le signal d'écho reçu dans le deuxième créneau temporel.

3. Procédé de surveillance par ultrasons selon les revendications 1 ou 2,
selon lequel
les créneaux temporels sont synchronisés avec les impulsions.

4. Procédé de surveillance par ultrasons selon l'une quelconque des revendications précédentes,
le procédé comprenant :
- l'émission de la séquence d'impulsions dans une première période de fonctionnement, si la comparaison renvoie un résultat en dessous d'un niveau limite l'émission des impulsions étant interrompue jusqu'à ce commence une deuxième période de fonctionnement, et
- l'émission des impulsions étant poursuivie sous la forme d'une séquence d'intrusion, si la comparaison renvoie un résultat au-dessus d'un niveau limite.

5. Procédé de surveillance par ultrasons selon l'une quelconque des revendications précédentes,
selon lequel
la séquence d'impulsions peut être réglée par rapport au nombre d'impulsions et à l'intervalle entre les impulsions.

6. Procédé de surveillance par ultrasons selon l'une quelconque des revendications précédentes,
selon lequel
les créneaux temporels sont réglables.

7. Système de surveillance par ultrasons pour être mis en oeuvre dans le procédé selon l'une quelconque des revendications 1 à 4,
comprenant :
- un émetteur,
- un récepteur, et
- un microprocesseur prévu pour envoyer une séquence d'impulsions ultrasonores (P1 ... P5), séparées par un intervalle de temps (I), provenant de l'émetteur, pour recevoir par l'intermédiaire d'une multitude de créneaux temporels (W1, W2) un signal d'écho (11) résultant et pour le comparer, l'intervalle de temps (I) étant réglé de telle sorte que les échos générés par les impulsions (P1 ... P5) sont superposés pour constituer le signal d'écho (11) résultant.

8. Système de surveillance par ultrasons selon la revendication 7,
le microprocesseur étant conçu de telle sorte que
la séquence d'impulsions est interrompue pendant la partie restante d'une première période de fonctionnement, et la séquence est transmise pendant une deuxième période de fonctionnement, si la comparaison renvoie un résultat situé en dessous d'un niveau limite, et une séquence d'intrusion étant déclenchée, si la comparaison renvoie un résultat au-dessus du niveau limite.

9. Système de surveillance par ultrasons selon la revendication 7 ou 8,
**caractérisé en ce que**
le récepteur et l'émetteur sont combinés dans un appareil d'émission et de réception.
